# FASCICULE DE BREVET EUROPEEN

(11) **EP 2 855 168 B1**
(45) Date de publication et mention de la délivrance du brevet: **04.05.2016**
(21) Numéro de dépôt: 13723116.3
(22) Date de dépôt: 15.05.2013
(51) Int. Cl.: B60C 3/08

(54) **PNEUMATIQUE PLIABLE, PROCEDE, UTILISATION**
FALTBARER REIFEN, VERFAHREN UND VERWENDUNG
FOLDABLE TYRE, METHOD AND USE

(30) Priorité: 24.05.2012 FR 1254735
(43) Date de publication de la demande: 08.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63040 Clermont-Ferrand Cedex 9 (FR); VILCOT, Florian, F-63040 Clermont-Ferrand Cedex 9 (FR)
(74) Mandataire: Bauvir, Jacques
(86) Numéro de dépôt international: PCT/EP2013/060008
(87) Numéro de publication internationale: WO 2013/174687

(56) Documents cités:
- US-A- 3 139 135

## Description

L'invention concerne un pneumatique pliable, un procédé de pliage et une utilisation pour véhicule de tourisme.

Dans ce qui suit, on désigne par :
- « plan circonférentiel» : un plan perpendiculaire à l'axe de rotation du pneumatique,
- « plan équatorial » : un plan circonférentiel passant par le milieu de la surface de roulement du pneumatique et,
- « plan axial » : un plan qui contient l'axe de rotation du pneumatique,
- « direction axiale » : direction parallèle à l'axe de rotation du pneumatique,
- « direction radiale » : une direction coupant l'axe de rotation du pneumatique et perpendiculaire à celui-ci,
- « direction circonférentielle » : une direction tangente à la surface de la bande de roulement selon le sens de rotation du pneumatique,
- « radialement intérieur à » : plus proche de l'axe de rotation du pneumatique,
- « radialement extérieur à »: plus éloigné de l'axe de rotation du pneumatique.
- « axialement intérieur à » : plus proche du plan équatorial,
- « axialement extérieur à » : plus éloigné du plan équatorial.

Un pneumatique comprend une bande de roulement destinée à venir en contact avec le sol par l'intermédiaire d'une surface de roulement, se prolongeant radialement vers l'intérieur par deux flancs reliés à deux bourrelets destinés à assurer la liaison du pneumatique avec une jante.

Un pneumatique radial comprend plus particulièrement une armature de renforcement comprenant une armature de sommet, radialement intérieure à la bande de roulement, et une armature de carcasse radiale, radialement à l'intérieur de l'armature de sommet.

L'armature de carcasse comprend habituellement au moins une couche d'éléments de renforcement constitué de fils sensiblement parallèles entre eux et faisant habituellement, avec la direction circonférentielle un angle compris entre 85° et 95°. L'armature de carcasse s'enroule dans la plupart des pneumatiques dans chaque bourrelet de l'intérieur vers l'extérieur du pneumatique, autour d'un élément de renforcement circonférentiel, appelé tringle, pour former un retournement. La tringle peut être formée d'un assemblage de fils élémentaires ou de câbles, eux-mêmes formés d'un assemblage de fils élémentaires.

L'armature de sommet comprend généralement plusieurs couches d'armature de sommet. Ces couches sont le plus souvent constituées d'éléments de renforcement métalliques noyés dans un matériau élastomérique.

Dans le cas d'un pneumatique pour véhicule de tourisme, l'épaisseur de l'armature de sommet, constituée essentiellement par l'empilage radial de l'armature de sommet et de l'armature de carcasse est habituellement comprise entre 2 et 7mm. Un flanc de pneumatique pour véhicule de tourisme a généralement une épaisseur comprise entre 2,6 et 7mm.

Le pneumatique à carcasse croisée se distingue d'un pneumatique de technologie radial par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

Il est déjà connu du document WO10/100088 un pneumatique pliable pour bicyclette comprenant une armature de carcasse dont chaque extrémité est ancrée dans deux bourrelets par retournement autour d'un élément de renfort, appelé tringle. Chaque bourrelet est prolongé radialement par des flancs rejoignant une bande de roulement. Ce pneumatique comprend une tringle formée par enroulement d'un câble métallique saturé et non fretté, formé de filaments.

Il est par ailleurs connu du document FR 2,348,065 un pneumatique pliable, monté sur jante, pour des véhicules, tels que des automobiles. Ce pneumatique comporte une bande de roulement sensiblement annulaire située centralement, et des flancs prolongeant la bande de roulement et se terminant par des bourrelets inextensibles, c'est-à-dire dont la tringle a une rigidité circonférentielle élevée. Lorsque le pneumatique est dégonflé, les flancs peuvent être pliés vers l'intérieur l'un vers l'autre de manière à être pratiquement aplatis à l'intérieur du pneumatique par rapport à la bande de roulement.

Enfin, le document US 4,057,091 divulgue encore le pliage d'un pneumatique pour véhicule automobile lorsqu'il est monté sur une jante. Dans une telle combinaison, et lorsqu'il est dégonflé, le pneumatique peut être aplati par repliement interne de ses flancs sur eux-mêmes vers cette jante.

Mais de telles configurations de pliage de pneumatique pour véhicule automobile tiennent compte de la présence permanente de la jante, et conservent malgré tout un encombrement important, et un poids élevé du fait de la présence de la jante.

Par ailleurs, lorsque les pneumatiques sont fabriqués sur des lieux de productions éloignés des lieux de vente, il est nécessaire de les transporter. Lors de leur transport, même s'ils sont comprimés ensemble, les pneumatiques occupent encore un volume important.

En effet, un mode de conditionnement utilisé actuellement consiste tout d'abord à disposer verticalement et linéairement une première rangée de pneumatiques formant un angle d'inclinaison avec le sol de manière à les superposer partiellement. D'autres pneumatiques sont ensuite incorporés et enfoncés dans la partie de l'orifice laissée libre de chaque pneumatique de la première rangée, formant ainsi une seconde rangée. Un tel mode de conditionnement permet d'ajouter 30% de pneumatique par m³ en plus par rapport à un rangement dans lequel les pneumatiques sont disposés côte à côte sans déformation.

Aussi il subsiste le besoin de pouvoir conditionner un ou plusieurs pneumatiques, de type radial ou de type à carcasse croisée, pour véhicule automobile, non montés sur jante, de manière plus ou moins compacte, le temps de leur transport et/ou de leur stockage, sans endommager leur structure interne, tout en leur permettant de retrouver très rapidement leur forme initiale après dépliage et gonflage.

L'invention a pour objet un pneumatique pliable pour véhicule comportant au moins une armature de carcasse associée éventuellement à une armature de sommet inextensible, elle-même radialement à l'intérieur d'une bande de roulement, lesdites armatures étant chacune constituées d'au moins une couche d'éléments de renforcement, ladite bande de roulement étant reliée à deux bourrelet par l'intermédiaire de deux flancs, lesdits bourrelets étant destinés à entrer en contact avec une jante, chaque bourrelet comportant au moins un élément de renforcement circonférentiel inextensible, appelé tringle, ladite tringle définissant une ligne moyenne formant une courbe fermée sensiblement circulaire dans un plan circonférentiel, lesdits flancs présentant une épaisseur comprise entre 2,6 et 7 mm et ladite armature de sommet présentant une épaisseur comprise entre 2 et 7mm.

Le pneumatique se caractérise en ce que la tringle de chaque bourrelet est flexible, et en ce qu'après pliage du pneumatique la ligne moyenne de la tringle définit simultanément une première courbure définie dans le plan équatorial ayant un premier pas d'hélice tournant dans le sens trigonométrique dans le plan axial, et une seconde courbure définie dans ledit plan équatorial ayant un second pas d'hélice tournant dans le sens antitrigonométrique dans ledit plan axial, les premières et secondes courbures étant reliées entre elles par une troisième courbure de raccordement définie dans ledit plan équatorial, la projection desdites première, seconde et troisième courbures du pneumatique plié, sur un plan axial définissant l'encombrement bidimensionnel dudit pneumatique plié par un périmètre total P inférieur ou égal à [3x(2H+A) H] étant la hauteur de flanc et A la largeur du pneumatique.

Une tringle est dite flexible lorsque, fléchie dans son plan autour d'une poulie de rayon 10mm, aucun des éléments rigides la constituant n'atteint une déformation permanente.

Selon l'invention, une armature de sommet est inextensible lorsque l'effort, pour la déformer de 5%, est au moins égal à 40N, et une tringle est inextensible lorsque l'effort, pour l'allonger de 1%, est au moins égal à 2500N.

Le pneumatique selon l'invention présente l'avantage de pouvoir augmenter de manière significative le nombre de pneumatiques par unité de volume lors du transport et/ou du stockage, entraînant ainsi un gain économique important.

En effet, le mode de pliage selon l'invention permet un stockage de pneumatique avec un gain allant de 30 à 50% par m³ par rapport notamment au mode de conditionnement de type chaînage, explicité précédemment. Le pneumatique selon l'invention peut être plié, et stocké en vrac ou disposé dans une boîte.

Un autre avantage du pneumatique de l'invention est qu'il peut être soumis et conservé plié, quelle que soit sa taille. Enfin, le pneumatique selon l'invention peut rester plié le temps de son transport et/ou de son stockage sans aucun impact négatif sur ses performances.

Un autre objet de l'invention est un procédé pour plier un pneumatique sous la forme d'une vrille, tel que définie précédemment, qui consiste à :
- saisir simultanément le pneumatique à une première et une seconde extrémités d'un axe passant par le diamètre du pneumatique, et à
- réaliser, selon ledit axe, une première rotation présentant un premier angle de rotation de la première extrémité et, au choix soit effectuer une seconde rotation présentant un second angle de rotation de la seconde extrémité, lesdites rotations étant effectuées en sens opposé, soit maintenir fixe la seconde extrémité.

La valeur absolue de l'addition du premier angle et de l'éventuel second angle de rotation est de préférence comprise entre 300° et 360°. Ceci est équivalent à une variation comprise entre 5/6 et 6/6 du premier et/ou du second pas d'hélice.

Enfin, l'invention a pour dernier objet une utilisation du pneumatique tel que défini précédemment pour véhicule de tourisme.

De préférence, les premier et second pas d'hélice desdites première et seconde courbures sont identiques ou différents.

Les premier et second pas d'hélice peuvent être compris entre 75 et 125% du diamètre du pneumatique. Ces valeurs de pourcentages sont de préférence obtenues au niveau de la ligne moyenne de la tringle.

De préférence, le pneumatique selon l'invention comprend un moyen de maintien dans la position pliée.

De préférence, le procédé de pliage consiste à appliquer en outre au moins un moyen de maintien en position plié, qui est de préférence appliqué au centre du pneumatique. Ce moyen peut être constitué par une sangle ou un feuillard de cerclage.

L'invention va maintenant être illustrée à l'aide des différents modes de réalisation détaillés qui suivent, et qui ne limitent en aucune manière les objets de l'invention.
- la figure 1 représente une vue schématique en trois dimensions d'un pneumatique non plié,
- la figure 2 représente une vue schématique en trois dimensions d'un pneumatique dont le pliage a été initié, et
- la figure 3 représente une vue schématique en trois dimensions d'un pneumatique plié,
- la figure 4 représente une vue schématique d'un pneumatique plié selon la figure 3 avec différents plans axiaux perpendiculaires à l'axe XX', et
- la figure 5 représente une vue schématique de l'encombrement bidimensionnel d'un pneumatique plié selon la figure 3.

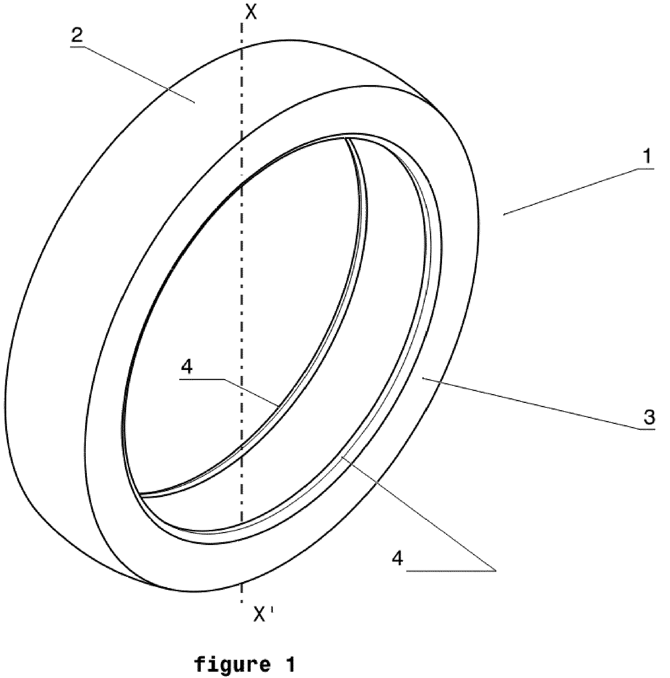

La figure 1 représente un pneumatique de véhicule de tourisme, de référence générale 1, non plié comprenant une bande de roulement 2 qui se prolonge radialement vers l'intérieur par deux flancs 3 reliés à deux bourrelets 4, lesdits bourrelets 4 comprenant une tringle (élément de renforcement) (non représenté).

Radialement à l'intérieur de ladite bande de roulement 2 se trouvent successivement une armature de sommet inextensible et une armature de carcasse (non représentées). Chaque bourrelet 4 comporte au moins une tringle. Cette tringle, qui définit une ligne moyenne formant une courbe fermée sensiblement circulaire dans un plan circonférentiel, est inextensible et flexible.

La tringle est de préférence constituée en acier, et se présente sous la forme d'un câble saturé et non fretté, formé de filaments ; lesdits filaments étant d'un diamètre égale à 0,18mm. Le câble est un câble métallique 19.18 de formule (1+6+12), les couches étant formées avec le même sens de rotation et avec des pas identiques égaux à 10mm. Un tel câble autorise la formation d'une tringle par un enroulement de 3 à 16 tours. Le nombre de tours nécessaires est fonction de la dimension du pneumatique et de son usage.

L'épaisseur moyenne E_{F} du flanc du pneumatique selon l'invention, mesurée, au point situé au milieu selon la direction radiale entre le point haut de la tringle et le point bas du pneumatique sur le plan équatorial, est comprise entre 2,6 et 7mm.

L'épaisseur moyenne E_{S} de l'armature de sommet 4, mesurée au plan équatorial, est comprise entre 2 et 7mm.

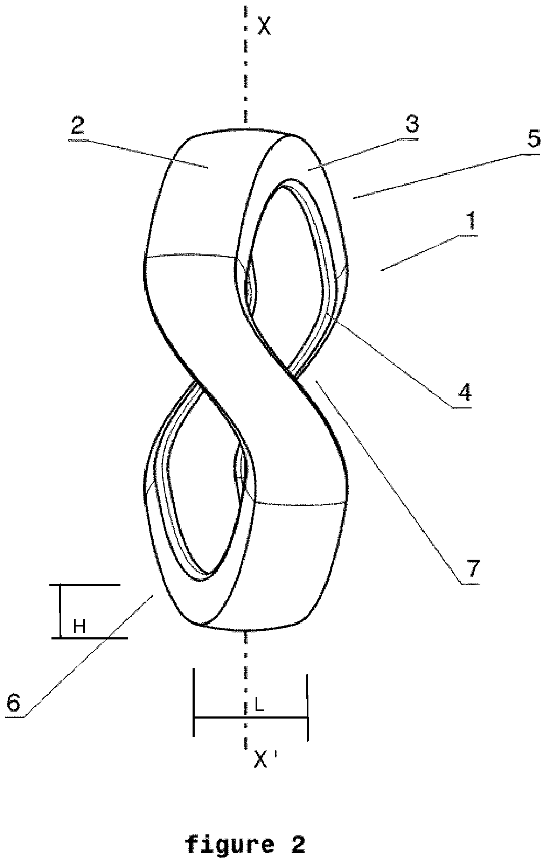

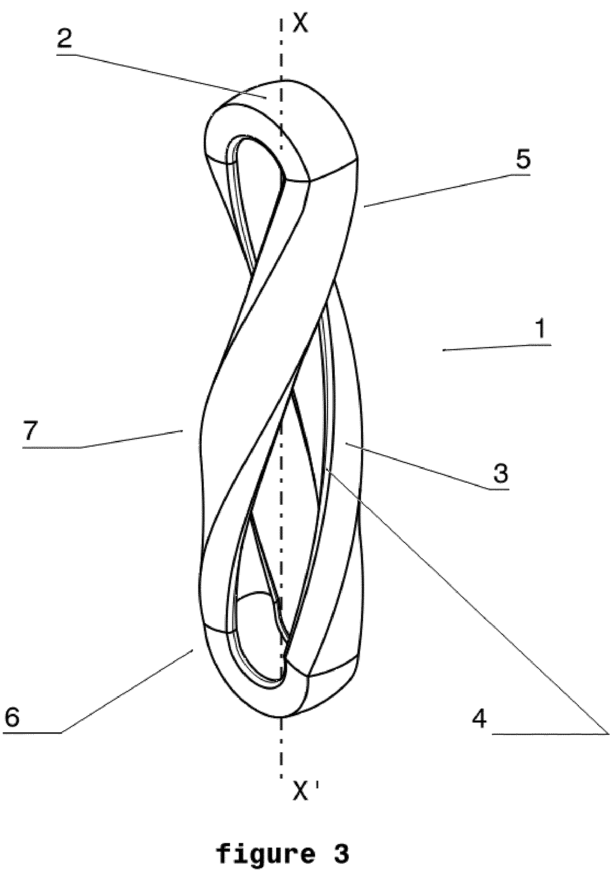

La figure 2 montre un pneumatique, par exemple de référence commerciale 185/65 R 14, dont le pliage a été initié, et la figure 3 montre le même pneumatique après pliage. Le pliage du pneumatique est effectué en saisissant tout d'abord deux extrémités, comprenant une portion de la bande de roulement 2 et une portion des flancs 3, lesdites extrémités étant diamétralement opposées et situées sur l'axe XX', ledit axe XX' correspondant au diamètre du pneumatique et passant donc par son centre.

On réalise ensuite deux rotations, de sens opposé, en ces deux points autour dudit axe XX'. La première rotation présente un premier angle et la seconde rotation présente un second angle. L'addition des valeurs absolues du premier et du second angle est de préférence égale à 300°.

Après pliage, la ligne moyenne de la tringle (élément de renfort) présente dans le bourrelet 4, définit alors simultanément une première courbure, de référence générale 5 définie dans le plan équatorial, avec un premier pas d'hélice de 61cm tournant dans le sens triginométrique dans le plan axial, et une seconde courbure, de référence générale 6 définie dans le plan équatorial, avec un second pas d'hélice de 65cm tournant dans le sens antitriginométrique dans le plan axial.

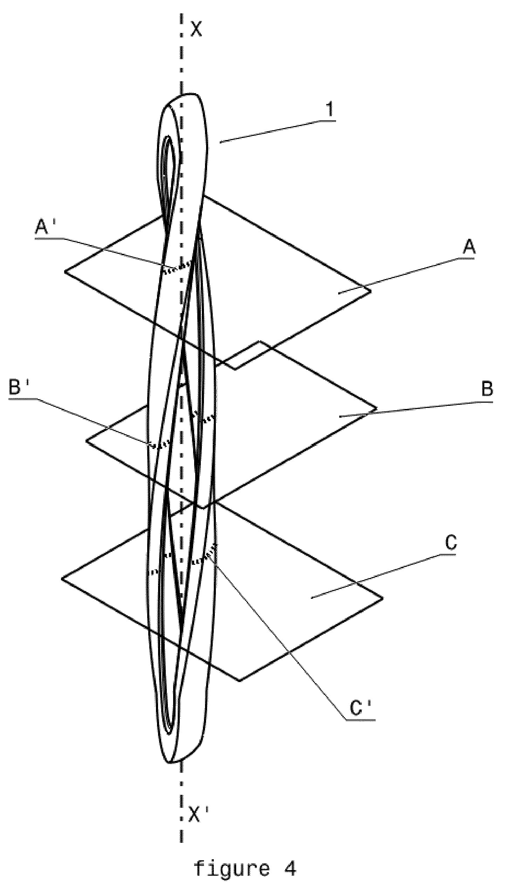

Comme le montre la figure 4, trois plans axiaux A, B et C ont été représentés. Les plans axiaux A et C sont, respectivement, sensiblement disposés au niveau de la première courbure 5 et de la seconde courbure 6, et sont perpendiculaires à l'axe XX'. Le plan axial B, perpendiculaire à l'axe XX', est sensiblement disposé au niveau de la troisième courbure 7.

L'intersection de chacun des plans axiaux A, B et C avec le pneumatique plié permet de définir un encombrement bidimensionnel du pneumatique après son pliage selon l'invention.

Cet encombrement est défini en projetant sur chaque plan axial A, B et C la totalité de l'empreinte correspondante à l'emplacement dudit plan du pneumatique plié. De ces empreintes sont extraites uniquement toutes les parties convexes relatives au pneumatique plié.

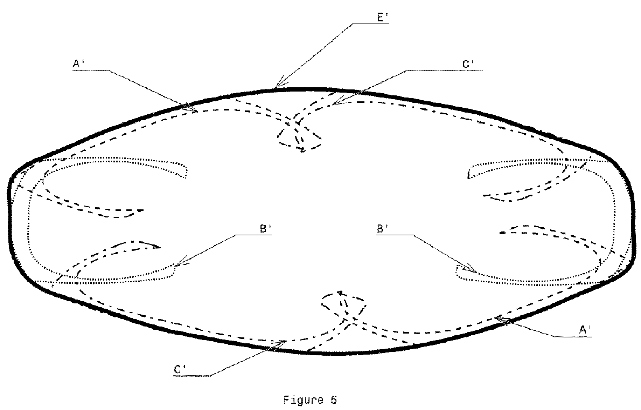

La figure 5 représente l'encombrement bidimensionnel de l'ensemble des parties convexes extraites et projetées sur chaque plan axial A, B et C du pneumatique plié. Comme on peut le voir sur cette figure, cet encombrement a une forme sensiblement rectangulaire.

Le périmètre total de cet encombrement est obtenue par la formule : P < 3x(2H + L) avec L la largeur du pneumatique non plié, et H la hauteur de son flanc.

De préférence, P < 2,5x(2H + L).

## Revendications

1. Pneumatique pliable pour véhicule comportant au moins une armature de carcasse associée éventuellement à une armature de sommet inextensible, elle-même radialement à l'intérieur d'une bande de roulement (2), lesdites armatures étant chacune constituées d'au moins une couche d'éléments de renforcement, ladite bande de roulement étant reliée à deux bourrelet (4) par l'intermédiaire de deux flancs (3), lesdits bourrelets (4) étant destinés à entrer en contact avec une jante, chaque bourrelet (4) comportant au moins un élément de renforcement circonférentiel inextensible, appelé tringle, ladite tringle définissant, à un état libre de toute contrainte, une ligne moyenne formant une courbe fermée sensiblement circulaire dans un plan circonférentiel, lesdits flancs présentant une épaisseur comprise entre 2,6 et 7 mm et ladite armature de sommet présentant une épaisseur comprise entre 2 et 7 mm, **caractérisé en ce que** la tringle de chaque bourrelet est flexible, **et en ce qu'**après pliage du pneumatique la ligne moyenne de la tringle définit simultanément une première courbure (5) définie dans le plan équatorial ayant un premier pas d'hélice tournant dans le sens trigonométrique dans le plan axial, et une seconde courbure (6) définie dans ledit plan équatorial ayant un second pas d'hélice tournant dans le sens antitrigonométrique dans ledit plan axial, les premières et secondes courbures étant reliées entre elles par une troisième courbure (7) de raccordement définie dans ledit plan équatorial, la projection desdites première, seconde et troisième courbures du pneumatique plié, sur un plan axial définissant l'encombrement bidimensionnel dudit pneumatique plié par un périmètre totale P inférieur ou égal à 3x(2H+L), H étant la hauteur de flanc et L la largeur du pneumatique.

2. Pneumatique selon la revendication 1, **caractérisé en ce que** les premier et second pas d'hélice desdites première et seconde courbures sont identiques ou différents.

3. Pneumatique selon l'une des revendications 1 ou 2, **caractérisé en ce que** les premier et second pas d'hélice sont compris entre 75 et 125% du diamètre du pneumatique.

4. Pneumatique selon l'une des revendications précédentes, **caractérisé en ce qu**'il comprend un moyen de maintien de la position pliée.

5. Procédé de pliage **caractérisé en ce qu**'il consiste à :
- saisir simultanément le pneumatique à une première et une seconde extrémités d'un axe passant par le diamètre du pneumatique, et à
- réalise, selon ledit axe, une première rotation présentant un premier angle de rotation de la première extrémité et, au choix soit effectuer une seconde rotation présentant un second angle de rotation de la seconde extrémité, lesdites rotations étant effectuées en sens opposé, soit maintenir fixe la seconde extrémité.

6. Procédé de pliage selon la revendication 5, **caractérisé en ce que** l'addition des valeurs absolues du premier angle et dudit éventuel second angle de rotation est comprise entre 300° et 360°.

7. Procédé selon l'une des revendications 5 ou 6, **caractérisé en ce qu**'il consiste à appliquer en outre au moins un moyen de maintien sur le pneumatique plié.

8. Procédé selon la revendication 7, **caractérisé en ce que** le moyen de maintien est appliqué au centre du pneumatique plié.

9. Utilisation du pneumatique selon l'une des revendications 1 à 4 pour véhicule de tourisme.

## Patentansprüche

1. Faltbarer Reifen für ein Fahrzeug, welcher mindestens eine Karkassenbewehrung aufweist, die eventuell einer nicht ausdehnbaren Scheitelbewehrung zugeordnet ist, welche sich selbst radial innerhalb einer Lauffläche (2) befindet, wobei die Bewehrungen jeweils aus mindestens einer Schicht aus Verstärkungselementen besteht, wobei die Lauffläche mit Hilfe von zwei Flanken (3) mit zwei Wülsten (4) verbunden ist, wobei die Wülste (4) dafür vorgesehen sind, mit einer Felge in Kontakt zu gelangen, wobei jede Wulst (4) mindestens ein nicht ausdehnbares, umlaufendes Verstärkungselement, welches Draht genannt wird, aufweist, wobei der Draht in einem Zustand, der frei von jeglicher Belastung ist, eine mittlere Linie definiert, welche eine im Wesentlichen kreisförmige geschlossene Kurve in einer Umfangsebene bildet, wobei die Flanken eine Dicke aufweisen, welche zwischen 2,6 und 7 mm liegt, und wobei die Scheitelbewehrung eine Dicke aufweist, welche zwischen 2 und 7 mm liegt, **dadurch gekennzeichnet, dass** der Draht von jeder Wulst flexibel ist, und dass nach Falten des Reifens die mittlere Linie des Drahtes gleichzeitig eine erste Krümmung (5), welche in der Äquatorebene definiert ist und einen ersten Gang einer Spirale besitzt, welche sich gegen den Uhrzeigersinn in der axialen Ebene dreht, und eine zweite Krümmung (6) definiert, welche in der Äquatorebene definiert ist und einen zweiten Gang einer Spirale besitzt, welche sich im Uhrzeigersinn in der axialen Ebene dreht, wobei die erste und zweite Krümmung durch eine dritte Verbindungskrümmung (7) verbunden sind, welche in der Äquatorebene definiert ist, wobei die Projektion der ersten, zweiten und dritten Krümmung des gefalteten Reifens in einer axialen Ebene den zweidimensionalen Platzbedarf des gefalteten Reifens durch einen Gesamtumfang P definiert, welcher kleiner oder gleich 3x(2H+L) ist, wobei H die Höhe der Flanke und L die Breite des Reifens ist.

2. Reifen nach Anspruch 1, **dadurch gekennzeichnet, dass** der erste und zweite Gang einer Spirale der ersten und zweiten Krümmung identisch oder verschieden sind.

3. Reifen nach einem der Ansprüche 1 oder 2, **dadurch gekennzeichnet, dass** der erste und zweite Gang einer Spirale zwischen 75 und 125% des Durchmessers des Reifens liegen.

4. Reifen nach einem der vorhergehenden Ansprüche, **dadurch gekennzeichnet, dass** er ein Mittel zum Festhalten der gefalteten Position aufweist.

5. Verfahren zum Falten, **dadurch gekennzeichnet, dass** es aus folgenden Schritten besteht:
gleichzeitiges Ergreifen des Reifens an einem ersten und einem zweiten Ende einer durch den Durchmesser des Reifens verlaufenden Achse, und
ausführt einer ersten Drehung entlang der Achse, welche einen ersten Drehwinkel des ersten Endes aufweist, und wahlweise entweder eine zweite Drehung durchführen, welche einen zweiten Drehwinkel des zweiten Endes aufweist, wobei die Drehwinkel in entgegengesetzter Richtung durchgeführt werden, oder das zweite Ende festhalten.

6. Verfahren zum Falten nach Anspruch 5, **dadurch gekennzeichnet, dass** die Addition der Absolutwerte des ersten Winkels und des eventuellen zweiten Drehwinkels zwischen 300° und 360° liegt.

7. Verfahren zum Falten nach einem der Ansprüche 5 oder 6, **dadurch gekennzeichnet, dass** es darin besteht, außerdem mindestens ein Mittel zum Festhalten des gefalteten Reifens anzubringen.

8. Verfahren nach Anspruch 7, **dadurch gekennzeichnet, dass** das Mittel zum Festhalten im Zentrum des gefalteten Reifens angebracht wird.

9. Verwendung des Reifens nach einem der Ansprüche 1 bis 4 für Personenkraftfahrzeug.

## Claims

1. Collapsible tyre for a vehicle, comprising at least one carcass reinforcement optionally associated with an inextensible crown reinforcement, itself radially on the inside of a tread (2), said reinforcements each consisting of at least one layer of reinforcing elements, said tread being connected to two beads (4) by two sidewalls (3), said beads (4) being intended to come into contact with a rim, each bead (4) comprising at least one inextensible circumferential reinforcing element called a bead wire, said bead wire defining, when free of any stress, a mean line forming a substantially circular closed curve in a circumferential plane, said sidewalls having a thickness of between 2.6 and 7 mm and said crown reinforcement having a thickness of between 2 and 7 mm, **characterized in that** the bead wire of each bead is flexible, **and in that** after the tyre has been collapsed, the mean line of the bead wire simultaneously defines a first curvature (5) defined in the equatorial plane and having a first helix pitch extending anticlockwise in the axial plane, and a second curvature (6) defined in said equatorial plane and having a second helix pitch extending clockwise in said axial plane, the first and second curvatures being connected together by a third connecting curvature (7) defined in said equatorial plane, the projection of said first, second and third curvatures of the collapsed tyre onto an axial plane defining the two-dimensional envelope of said collapsed tyre by way of a total perimeter P of less than or equal to [3x(2H+A)], H being the height of the sidewall and A the width of the tyre.

2. Tyre according to Claim 1, **characterized in that** the first and second helix pitches of said first and second curvatures are identical or different.

3. Tyre according to either of Claims 1 and 2, **characterized in that** the first and second helix pitches are between 75 and 125% of the diameter of the tyre.

4. Tyre according to one of the preceding claims, **characterized in that** it comprises a means for retaining the collapsed position.

5. Collapsing method, **characterized in that** it consists in:
- simultaneously grasping the tyre at a first and a second end of an axis passing through the diameter of the tyre, and in
- carrying out, along said axis, a first rotation with a first angle of rotation of the first end and, depending on choice, either carrying out a second rotation with a second angle of rotation of the second end, said rotations being carried out in opposite directions, or keeping the second end fixed.

6. Collapsing method according to Claim 5, **characterized in that** the result of the addition of the absolute values of the first angle and of said possible second angle of rotation is between 300° and 360°.

7. Method according to either of Claims 5 and 6, **characterized in that** it consists in also applying at least one retaining means to the collapsed tyre.

8. Method according to Claim 7, **characterized in that** the retaining means is applied to the centre of the collapsed tyre.

9. Use of the tyre according to one of Claims 1 to 4 for a passenger vehicle.
